# EUROPEAN PATENT APPLICATION

(11) **EP 4 435 946 A1**
(43) Date of publication of application: **25.09.2024**
(21) Application number: 22894626.5
(22) Date of filing: 01.11.2022
(51) Int. Cl.: H01M 50/209

(54) **BATTERY BOX BODY, BATTERY, ELECTRICAL DEVICE, AND MANUFACTURING APPARATUS**

(30) Priority: 22.11.2021 CN 202122869694 U
(71) Applicant: Contemporary Amperex Technology Co., Limited, Ningde, Fujian 352100 (CN)
(72) Inventor: PAN, Xin, Ningde, Fujian 352100 (CN); WANG, Qing, Ningde, Fujian 352100 (CN); CHEN, Zhiming, Ningde, Fujian 352100 (CN)
(74) Representative: Gong, Jinping
(86) International application number: PCT/CN2022/129086
(87) International publication number: WO 2023/088089

(57) **Abstract**

The present application discloses a box of a battery, a battery, an electrical apparatus, and a manufacturing device. The box includes: a frame, configured to form an accommodating cavity; a reinforcing beam, arranged inside the accommodating cavity, the reinforcing beam having a hollow cavity; and a connecting element, configured to connect the frame with the reinforcing beam, part of the connecting element being accommodated in the hollow cavity. According to the box in embodiments of the present application, by accommodating part of the connecting element in the hollow cavity of the reinforcing beam, the accommodating depth of the connecting element can be flexibly adjusted during mounting of the reinforcing beam, thereby effectively improving the mounting accuracy of the reinforcing beam.

## Description

The present application claims the priority of Chinese Patent Application No. 202122869694.0, entitled "BOX OF BATTERY, BATTERY, ELECTRICAL APPARATUS, AND MANUFACTURING DEVICE FOR BATTERIES" and filed on November 22, 2021, which is incorporated herein by reference in its entirety.

### TECHNICAL FIELD

The present application relates to the field of batteries, in particular to a box of a battery, a battery, an electrical apparatus, and a manufacturing device for batteries.

### BACKGROUND

In the existing battery manufacturing process, a reinforcing beam is often fixed to a battery box through a connecting element connected to the battery box. However, due to errors in processing of parts, it is difficult to ensure the mounting accuracy and connection reliability between the reinforcing beam and the battery box. Therefore, how to improve the mounting accuracy and connection reliability of the reinforcing beam has become an urgent problem to be solved.

### SUMMARY OF THE INVENTION

### Technical Problems

In view of the above problems, the present application provides a box of a battery, a battery, an electrical apparatus, and a manufacturing device for batteries, which can solve the problems of the mounting accuracy and connection reliability of the reinforcing beam.

### Technical Solutions

According to a first aspect, the present application provides a box of a battery, including: a frame, configured to form an accommodating cavity; a reinforcing beam, arranged inside the accommodating cavity, the reinforcing beam having a hollow cavity; and a connecting element, configured to connect the frame with the reinforcing beam, part of the connecting element being accommodated in the hollow cavity.

In some embodiments, the connecting element includes a first fixing portion and a second fixing portion which are connected, the first fixing portion is configured to connect the frame, the second fixing portion is configured to connect the reinforcing beam, and at least part of the second fixing portion is accommodated in the hollow cavity. By completely or partially accommodating the second fixing portion in the hollow cavity of the reinforcing beam, the distance between the reinforcing beam and the frame can be adjusted in real time according to the size of the current part during mounting of the reinforcing beam, thereby improving the mounting accuracy of the reinforcing beam.

In some embodiments, at least part of the second fixing portion abuts against an inner wall of the hollow cavity.

In some embodiments, the second fixing portion includes a first side wall and a second side wall which are arranged oppositely and are configured to abut against the inner wall of the hollow cavity; and a connecting wall, configured to connect the first side wall with the second side wall. By enabling the first side wall and second side wall on the second fixing portion to abut against the inner wall of the hollow cavity of the reinforcing beam, the connection reliability between the connecting element and the reinforcing beam can be further improved.

In some embodiments, the connecting wall is connected to one end of the first side wall and one end of the second side wall, and the other end of the first side wall is separated from the other end of the second side wall, so as to form an opening opposite to the connecting wall. Through the opening formed by the first side wall and the second side wall, when the reinforcing beam is connected to the second fixing portion of the connecting element, the first side wall and the second side wall can be squeezed to facilitate the second fixing portion to enter the hollow cavity of the reinforcing beam, thereby improving the mounting efficiency of the reinforcing beam.

In some embodiments, the reinforcing beam is provided with a through hole, and at least part of the second fixing portion is exposed from the through hole so as to be welded and fixed with the reinforcing beam. By providing the through hole on the reinforcing beam, the reinforcing beam can be welded to the second fixing portion exposed from the through hole to improve the connection strength between the reinforcing beam and the connecting element, thereby improving the connection reliability between the reinforcing beam and the box.

In some embodiments, the first fixing portion is connected to an edge of the second fixing portion and extends towards a direction away from the reinforcing beam.

In some embodiments, the frame is provided with an accommodating groove, and the accommodating groove is configured to accommodate at least part of the first fixing portion. Through the accommodating groove on the frame, the first fixing portion can be accommodated in the space inside the accommodating groove to reduce the space occupation of the connecting element in the box and reduce the risk of a battery module colliding with the connecting element during use of the box, thereby improving the connection reliability of the reinforcing beam.

According to a second aspect, the present application provides a battery, including the box in the above embodiment and a battery cell. The box is configured to accommodate the battery cell.

According to a third aspect, the present application provides an electrical apparatus, including the battery provided in the second aspect of the present application. The battery is configured to provide electric energy.

According to a fourth aspect, the present application provides a manufacturing device for batteries, including a providing module, configured to provide a battery cell and a box, the box including: a frame, a reinforcing beam and a connecting element, where the frame is configured to form an accommodating cavity, the reinforcing beam is arranged inside the accommodating cavity, the reinforcing beam has a hollow cavity, the connecting element is configured to connect the frame with the reinforcing beam, and part of the connecting element is accommodated in the hollow cavity; and an assembly module, configured to accommodate the battery cell in the box.

The above description merely provides an overview of the technical solutions of the present application. In order to more clearly understand the technical means of the present application, the present application may be implemented according to the content of the specification. Furthermore, in order to make the above and other objectives, features, and advantages of the present application more obvious and understandable, the detailed description of the present application is listed below.

### Beneficial Effect

In the technical solutions of the embodiments of the present application, part of the connecting element between the reinforcing beam and the frame is accommodated in the hollow cavity of the reinforcing beam. Through this design, when the reinforcing beam is mounted, the mounting position of the reinforcing beam in the box can be adjusted by adjusting the depth of the connecting element entering the hollow cavity, thereby overcoming the problem of the mounting accuracy caused by part processing errors of the reinforcing beam. In addition, the excessive squeezing of the connecting element by other parts in the box is also effectively reduced, thereby improving the connection reliability between the connecting element and the frame as well as the reinforcing beam.

### DESCRIPTION OF DRAWINGS

Various other advantages and benefits will become apparent to those of ordinary skill in the art upon reading the following detailed description of the embodiments. The drawings are for the purpose of illustrating the embodiments only and are not considered to be a limitation on the present application. Furthermore, the same components are denoted by the same reference numerals throughout the drawings. In the figures:
Fig. 1 is a schematic structural view of a vehicle provided in an embodiment of the present application;
Fig. 2 is a schematic structural view of a battery provided in an embodiment of the present application;
Fig. 3 is a schematic structural view of a battery module provided in an embodiment of the present application;
Fig. 4 is a schematic view of a breakdown structure of a battery cell provided in an embodiment of the present application;
Fig. 5 is a schematic view of an overall structure of a box provided in an embodiment of the present application;
Fig. 6 is a schematic top view of a box provided in an embodiment of the present application;
Fig. 7 is a partial schematic view of a part A in Fig. 5;
Fig. 8 is a cross-sectional schematic view along a B-B direction in Fig. 6;
Fig. 9 is a cross-sectional schematic view along a B-B direction of a box provided in another embodiment of the present application;
Fig. 10 is a partial schematic exploded view of a box provided in an embodiment of the present application; and
Fig. 11 is a schematic view of a manufacturing device provided in an embodiment of the present application.

The reference numerals in Detailed Description are as follows:
1. vehicle, 10. battery, 11. controller, 12. motor;
20. battery module, 21. battery cell, 211. end cover, 211a. electrode terminal, 212. case, 213. electrode assembly;
30. box, 301. first part, 302. second part;
40. frame, 401. accommodating cavity, 402. accommodating groove, 41. reinforcing beam, 411. hollow cavity, 411a. inner wall of hollow cavity, 412. through hole, 42. connecting element, 421. first fixing portion, 422. second fixing portion, 422a. first side wall, 422b. second side wall, 422c. connecting wall, 422d. opening;
100. manufacturing device, 110. providing module, 120. assembly module.

### DETAILED DESCRIPTION

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

It should be noted that, unless otherwise specified, the technical or scientific terms used in the embodiments of the present application should have the usual meanings as understood by those skilled in the art to which the embodiments of the present application belong.

In the description of the embodiments of the present application, the orientation or position relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or position relationships shown in the drawings, and are intended to facilitate the description of the embodiments of the present application and simplify the description only, rather than indicating or implying that the apparatus or element referred to must have a particular orientation or be constructed and operated in a particular orientation, and therefore are not to be interpreted as limitations on the embodiments of the present application.

In addition, the technical terms "first", "second", etc. are used for descriptive purposes only, and cannot be construed as indicating or implying a relative importance, or implicitly specifying the number of the indicated technical features. In the description of the embodiments of the present application, the meaning of "a plurality of" is two or more, unless otherwise explicitly and specifically defined.

In the description of the embodiments of the present application, unless otherwise expressly specified and limited, the technical terms "mount", "join", "connect", "fix", etc. should be understood in a broad sense, such as a fixed connection, a detachable connection, or an integral connection; a mechanical connection, or an electrical connection; or a direct connection, an indirect connection through an intermediate medium, an internal connection of two elements, or interaction between two elements. For those of ordinary skill in the art, the specific meanings of the above terms in the embodiments of the present application can be understood according to specific situations.

In the description of the embodiments of the present application, unless otherwise explicitly specified and defined, the expression of a first feature being "on" or "under" a second feature may be a case that the first feature is in direct contact with the second feature, or the first feature is in indirect contact with the second feature through an intermediate medium. Furthermore, the expression of the first feature being "over", "above" or "on top of" the second feature may be a case that the first feature is directly above or obliquely above the second feature, or only means that the level of the first feature is higher than that of the second feature. The expression of the first feature being "below", "underneath" or "under" the second feature may be a case that the first feature is directly underneath or obliquely underneath the second feature, or only means that the level of the first feature is lower than that of the second feature.

At present, a battery of an electric vehicle often requires dozens or even thousands of battery cells.

With the increasingly serious energy and environment problems, electric vehicles with the advantages such as national subsidies and clean energy are gradually becoming popular, and more and more consumers are choosing new energy vehicles. Power batteries are not only applied in energy storage power source systems such as water, fire, wind, and solar power stations, but also widely applied in electric transportation tools, such as electric bicycles, electric motorcycles, and electric vehicles, as well as many fields, such as military equipment and aerospace. With the continuous expansion of the application field of power batteries, the market demand is also constantly expanding.

The applicant notes that a reinforcing beam in a current battery box is generally connected to a frame of the box in a manner of direct insertion or external arrangement of an L-shaped connecting element. Taking an electrical apparatus being a vehicle as an example, when the reinforcing beam is fixed to the frame through the L-shaped connecting element, a bolt assembly protruding towards the direction of a battery module on the connecting element has a risk of collision with the battery module, and the collision affects the connection reliability between the reinforcing beam and the frame. Another connection manner is to directly mount the reinforcing beam in frame mounting holes through insertion, but at the same time, there may be a problem of high difficulty in controlling hole accuracy. If the hole accuracy is not high, the mounting of the reinforcing beam in holes will cause certain shaking, which is very unfavorable for the subsequent arrangement of battery cells. Therefore, how to ensure the mounting accuracy and improve the reliability of a connection position has become an urgent problem that needs to be solved.

In order to solve the above technical problems, through research, the applicant found that the arrangement manner and structure of the connecting element can be changed in the design, so as to better connect the reinforcing beam with the frame of the box. Specifically, a box of a battery is provided, a specially designed connecting element is included in the box, and part of the connecting element is accommodated in a hollow cavity of a reinforcing beam.

Based on the above technical solution, when the reinforcing beam is mounted, the mounting position of the reinforcing beam in the box can be adjusted by adjusting the depth of the connecting element entering the hollow cavity, thereby overcoming the problem of the mounting accuracy caused by part processing errors during mounting of the reinforcing beam. In addition, the excessive squeezing of the connecting element by other parts in the box is also effectively reduced, thereby improving the connection reliability between the connecting element and the frame as well as the reinforcing beam.

The present application provides a box of a battery, a battery including the box, and an electrical apparatus using the battery. The box is suitable for any battery, such as a battery module and a battery pack, or a primary battery and a secondary battery. For example, the secondary battery includes a nickel-hydrogen battery, a nickel-cadmium battery, a lead-acid (or lead) battery, a lithium-ion battery, a sodium-ion battery, a polymer battery, or the like. The battery is suitable for various electrical apparatuses using the battery, such as mobile phones, portable devices, laptops, battery vehicles, electric toys, electric tools, electric vehicles, ships and spacecrafts. For example, the spacecrafts include airplanes, rockets, space shuttles, spaceships, and the like. The battery is configured to provide electric energy to the above electrical apparatus.

It should be understood that the technical solutions described in the embodiments of the present application are not only applicable to the battery and electrical apparatus described above, but also applicable to all batteries including the box and electrical apparatuses using the battery. However, for the sake of brevity, the following embodiments are described by taking an electric vehicle as an example.

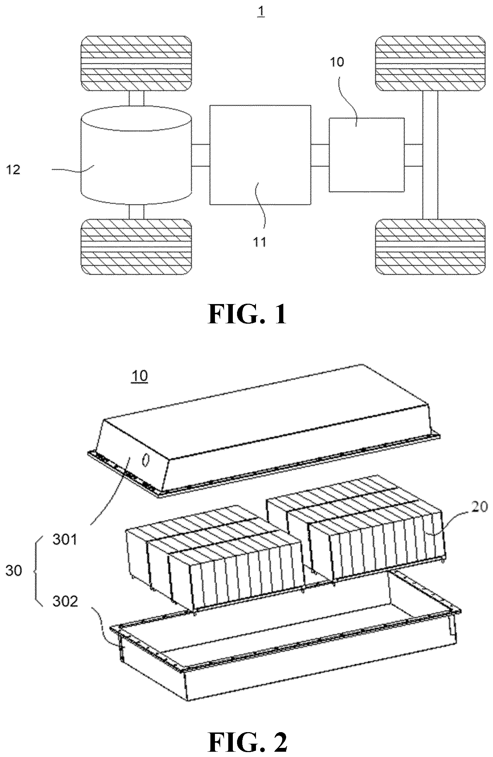

Referring to Fig. 1, Fig. 1 is a schematic structural view of a vehicle 1 provided in some embodiments of the present application. The vehicle 1 may be a fuel vehicle, a gas vehicle or a new energy vehicle, and the new energy vehicle may be an all-electric vehicle, a hybrid electric vehicle, an extended-range electric vehicle, or the like. A battery 10 is arranged inside the vehicle 1, and the battery 10 may be arranged at the bottom, head or tail of the vehicle 1. The battery 10 may be configured to supply power to the vehicle 1. For example, the battery 10 may be used as an operating power source of the vehicle 1. The vehicle 1 may further include a controller 11 and a motor 12. The controller 11 is configured to control the battery 10 to supply power to the motor 12, for example, to meet the working power demand for starting, navigation and driving of the vehicle 1.

In some embodiments of the present application, the battery 10 not only may serve as an operating power source of the vehicle 1, but also may serve as a driving power source of the vehicle 1, thus replacing or partially replacing fuel or natural gas to provide driving power for the vehicle 1.

In order to meet different power usage requirements, the battery 10 may include a plurality of battery cells 21. The battery cell 21 refers to the smallest unit that constitutes a battery module or a battery pack. The plurality of battery cells 21 may be connected in series and/or connected in parallel through electrode terminals to be used in various application scenarios. The battery mentioned in the present application includes a battery module or a battery pack. The plurality of battery cells 21 may be in series connection, parallel connection or series-parallel connection, and the series-parallel connection refers to a combination of series connection and parallel connection. The battery 10 may also be referred to as a battery pack. The plurality of battery cells 21 in the embodiments of the present application may directly form a battery pack, or may first form battery modules 20, and then, the battery modules 20 form a battery pack.

Fig. 2 is a schematic structural view of a battery 10 according to an embodiment of the present application. As shown in Fig. 2, the battery 10 may include a plurality of battery modules 20 and a box 30, and the plurality of battery modules 20 are accommodated in the box 30. The box 30 is configured to accommodate the battery cells 21 or battery modules 20 to prevent liquid or other foreign matters from affecting the charging or discharging of the battery cells 21. The box 30 may be a simple three-dimensional structure such as a single cuboid, cylinder or sphere, or a complex three-dimensional structure composed of simple three-dimensional structures such as a cuboid, cylinder or sphere, which will not be limited in the embodiments of the present application. The material of the box 30 may be an alloy material such as aluminum alloy or iron alloy, or a polymer material such as polycarbonate or polyisocyanurate foam, or a composite material such as glass fiber and epoxy resin, which will not be limited in the embodiments of the present application.

In some embodiments, the box 30 may include a first part 301 and a second part 302. The first part 301 and the second part 302 are covered by each other, and the first part 301 and the second part 302 together define the space for accommodating the battery cells 21. The second part 302 may be of a hollow structure with one end open, the first part 301 may be of a plate-like structure, and the first part 301 covers the opening side of the second part 302, such that the first part 301 and the second part 302 together define the space for accommodating the battery cells 21. Each of the first part 301 and the second part 302 may also be of a hollow structure with one side open, and the opening side of the first part 301 covers the opening side of the second part 302.

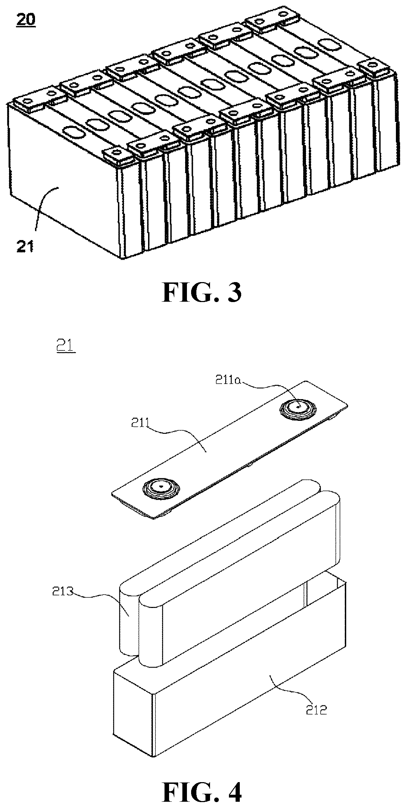

Fig. 3 is a schematic structural view of a battery module 20 according to an embodiment of the present application. As shown in Fig. 3, the battery module 20 may include a plurality of battery cells 21. The plurality of battery cells 21 may be in series connection, parallel connection, or series-parallel connection to form battery modules 20 first, and then, the plurality of battery modules 20 may be in series connection, parallel connection, or series-parallel connection to form the battery 10. In the present application, the battery cell 21 may include a lithium-ion battery, a sodium-ion battery, a magnesium-ion battery, or the like, which is not limited in the embodiments of the present application. The battery cell 21 may be in a cylindrical shape, a flat shape, a cuboid shape or another shape, which is also not limited in the embodiments of the present application. The battery cells 21 are generally classified into three types according to encapsulating manners: cylindrical battery cells 21, cubic battery cells 21 and pouch cells 21, which will also not be limited in the embodiments of the present application. However, for the sake of simplicity, the following embodiments will be described using a cubic battery cell 21 as an example.

Fig. 4 is a schematic view of a breakdown structure of a battery cell 21 provided in some embodiments of the present application. The battery cell 21 refers to the smallest unit constituting a battery. As shown in Fig. 4, the battery cell 21 includes an end cover 211, a case 212, and an electrode assembly 213.

The end cover 211 refers to a component that covers an opening of the case 212 to isolate the internal environment of the battery cell 21 from the external environment. Optionally, the shape of the end cover 211 may be adaptive to the shape of the case 212 so as to be matched with the case 212. Optionally, the end cover 211 may be made of a material (e.g., aluminum alloy) with certain hardness and strength. Accordingly, the end cover 211 is not easily deformed when being subjected to extrusion and collision, such that the battery cell 21 can have higher structural strength, and the safety performance can also be improved. Functional components such as electrode terminals 211a may be arranged on the end cover 211. The electrode terminal 211a may be electrically connected to the electrode assembly 213 to output or input the electric energy of the battery cell 21. In some embodiments, the end cover 211 may be further provided with a pressure relief mechanism for relieving internal pressure when the internal pressure or temperature of the battery cell 21 reaches a threshold. In some embodiments, an insulating member may be further arranged on an inner side of the end cover 211 and may be configured to isolate an electrical connection component in the case 212 from the end cover 211, thereby reducing the risk of short circuit. Exemplarily, the insulating member may be made of plastic, rubber, etc.

The case 212 is an assembly used to be matched with the end cover 211 to form the internal environment of the battery cell 21, where the formed internal environment can be used to accommodate the electrode assembly 213, an electrolyte (not shown in the figure) and other components. The case 212 and the end cover 211 may be separate components, an opening may be formed in the case 212, and at the opening, the opening is covered with the end cover 211 so as to form the internal environment of the battery cell 21. Optionally, the end cover 211 and the case 212 may also be integrated. Specifically, the end cover 211 and the case 212 may form a common connection surface before other components enter the case. When an interior of the case 212 is required to be encapsulated, the case 212 is covered with the end cover 211. The case 212 may be of various shapes and sizes, such as a rectangular solid, a cylinder and a hexagonal prism. Specifically, the shape of the case 212 may be determined according to the specific shape and size of the electrode assembly 213. The case 212 may be made of various materials, such as copper, iron, aluminum, stainless steel, aluminum alloy and plastic, which is not particularly limited in the embodiments of the present application.

The electrode assembly 213 is a component in which an electrochemical reaction occurs in the battery cell 21. One or more electrode assemblies 213 may be contained in the case 212. The electrode assembly 213 is mainly formed by winding or stacking a positive electrode plate and a negative electrode plate, and a separator is usually arranged between the positive electrode plate and the negative electrode plate. The portions, with active materials, of the positive electrode plate and the negative electrode plate constitute a main body part of the electrode assembly 213, and the portions, without the active materials, of the positive electrode plate and the negative electrode plate respectively constitute tabs (not shown in the figure). The positive tab and the negative tab may be located at one end of the main body part together or at two ends of the main body part respectively. In the charging and discharging processes of the battery cell 21, the positive electrode active material and the negative electrode active material react with the electrolyte, and the tabs are connected to the electrode terminals 211a to form a current loop.

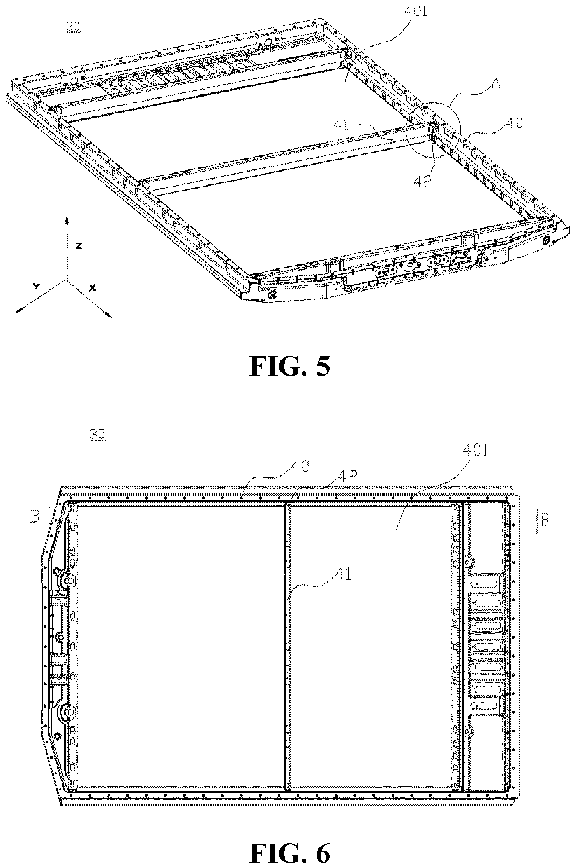

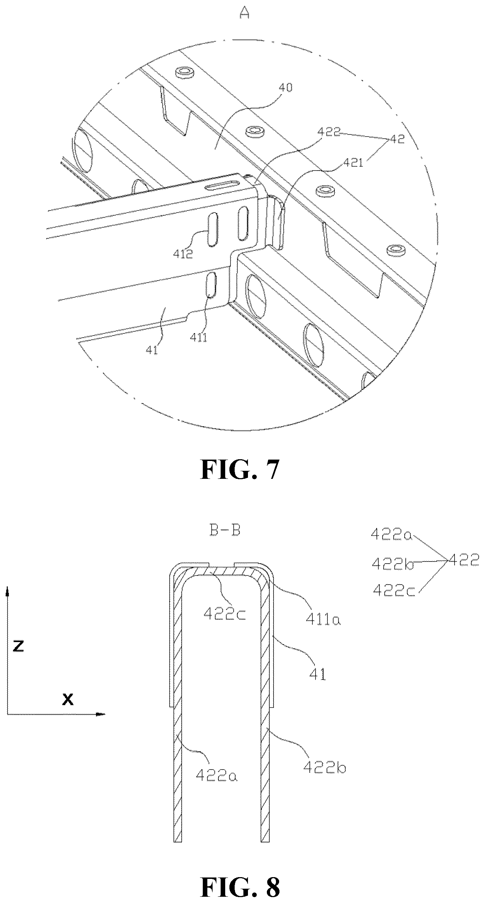

According to some embodiments of the present application, referring to Fig. 5 to Fig. 7, Fig. 5 is a schematic view of an overall structure of a box provided in an embodiment of the present application, Fig. 6 is a schematic top view of a box provided in an embodiment of the present application, and Fig. 7 is a partial schematic view of a part A in Fig. 5. The present application provides a box 30 of a battery. The box 30 includes a frame 40, a reinforcing beam 41 and a connecting element 42. The frame 40 is configured to form an accommodating cavity 401. The reinforcing beam 41 is arranged inside the accommodating cavity 401. The reinforcing beam 41 has a hollow cavity 411. The connecting element 42 is configured to connect the frame 40 with the reinforcing beam 41. Part of the connecting element 42 is accommodated in the hollow cavity 411.

As shown in the figure, a Z direction in the figure is a height direction of the box 30, and an X direction in the figure is a width direction X of the box 30.

The frame 40 refers to a frame for mounting other parts in the box 30 of the battery, which is provided with a plurality of through holes and can facilitate the mounting of other parts while reducing weight. In order to meet the requirements for internal operating environment and light weight of the battery, the material of the frame 40 needs to balance certain rigidity and certain deformability. For example, the material may be a metal which is easier to process, such as aluminum or steel. The frame 40 may be an integrated structure or a separately assembled structure. In engineering, a separately assembled structure may be selected generally to facilitate mounting.

The accommodating cavity 401 refers to the space formed between four opposite inner side surfaces on the frame 40. The size of the accommodating cavity 401 depends on the height of the frame 40 along the height direction Z of the box 30. A plurality of battery modules 20 can be arranged inside the accommodating cavity 401 to improve the performance of the battery 10.

"The reinforcing beam 41 has a hollow cavity 411" means that a certain space is formed on an inner surface of the reinforcing beam 41. Usually, the reinforcing beam 41 is formed by stamping or bending metals such as aluminum and steel. Arranging the reinforcing beam 41 on the frame 40 will increase the overall weight of the battery 10. The hollow cavity 411 can not only effectively reduce the weight of the reinforcing beam 41, but also be connected to the connecting element 42 to better reinforce the overall rigidity of the frame 40.

"Part of the connecting element 42 is accommodated in the hollow cavity 411" means that part of the connecting element 42 will enter the hollow cavity 411 of the reinforcing beam 41. Part of the connecting element 42, arranged in the hollow cavity 411, can provide certain support for the reinforcing beam 41.

By accommodating part of the connecting element 42 in the hollow cavity 411 of the reinforcing beam 41, when the reinforcing beam 41 is mounted, the mounting position of the reinforcing beam 41 in the box 30 can be adjusted by adjusting the depth of the connecting element 42 entering the hollow cavity 411, thereby overcoming the problem of the mounting accuracy caused by part processing errors during mounting of the reinforcing beam 41. In addition, the excessive squeezing of the connecting element 42 by other parts in the box 30 is also effectively reduced, thereby improving the connection reliability between the connecting element 42 and the frame 40 as well as the reinforcing beam 41.

According to some embodiments of the present application, still referring to Fig. 7, the connecting element 42 includes a first fixing portion 421 and a second fixing portion 422 which are connected, the first fixing portion 421 is configured to connect the frame 40, the second fixing portion 422 is configured to connect the reinforcing beam 41, and at least part of the second fixing portion 422 is accommodated in the hollow cavity 411.

The first fixing portion 421 refers to a component close to the side of the frame 40 on the connecting element 42. The first fixing portion 421 is configured to fix the connecting element 42 on the inner side surface of the frame 40. The specific connection mode may be welding, bolted connection, or the like. The connecting element 42 is generally formed by bending. On the one hand, the processing difficulty of the connecting element 42 can be reduced; and on the other hand, the integrated molding process also improves the reliability of the connecting element 42. The first fixing portion 421 may be of various shapes and sizes, such as a rectangle, a square and a cylinder. Specifically, the shape of the first fixing portion 421 may be determined according to the specific shape and size of the second fixing portion 422.

The second fixing portion 422 refers to a component close to the side of the reinforcing beam 41 on the connecting element 42. The second fixing portion 422 is configured to connect the reinforcing beam 41. The second fixing portion 422 can be flexibly adjusted according to the accuracy requirement during mounting of the reinforcing beam 41 to partially or completely enter the hollow cavity 411 of the reinforcing beam 41, thereby preventing the connection reliability of the reinforcing beam 41 from being affected by squeezing the frame 40 by the reinforcing beam 42.

By completely or partially accommodating the second fixing portion 422 in the hollow cavity 411 of the reinforcing beam 41, the distance between the reinforcing beam 41 and the frame 40 can be adjusted in real time according to the size of the current part during mounting of the reinforcing beam 41, thereby improving the mounting accuracy of the reinforcing beam 41.

According to some embodiments of the present application, referring to Fig. 8, Fig. 8 is a cross-sectional schematic view along a B-B direction in Fig. 6. As shown in the figure, at least part of the second fixing portion 422 abuts against an inner wall 411a of the hollow cavity.

The abutting refers to a state in which two connected components are supported by a force, that is, there is an interaction force between two connected components. The arrangement mode of the second fixing portion 422 in the hollow cavity 411 is flexible as long as the second fixing portion 422 abuts against at least one side wall of the inner wall 411a of the hollow cavity.

"The inner wall 411a of the hollow cavity" refers to a surface on the opposite side of the surface close to the side of the battery module 20 on the reinforcing beam 41. The shape of the inner wall 411a of the hollow cavity may be a regular plane or an irregular curved surface. Specifically, the shape and size of the inner wall 411a of the hollow cavity may be determined according to the second fixing portion 422.

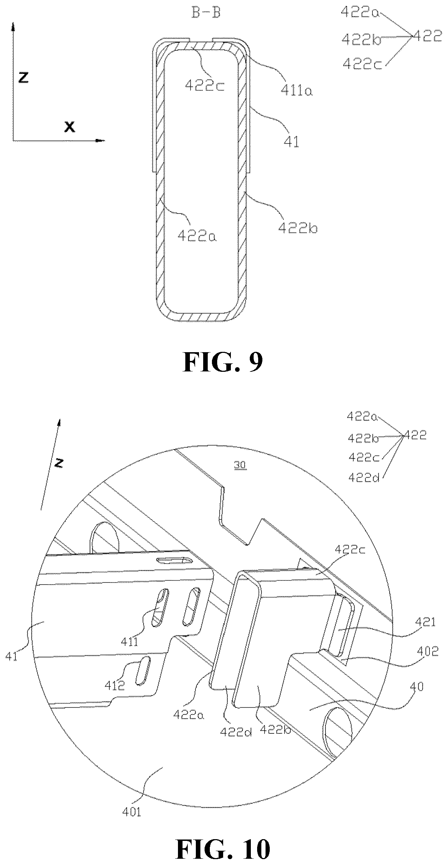

According to some embodiments of the present application, referring to Fig. 8 and Fig. 9, Fig. 9 is a cross-sectional schematic view along a B-B direction of a box provided in another embodiment of the present application. As shown in the figure, the second fixing portion 422 includes a first side wall 422a and a second side wall 422b which are arranged oppositely and are configured to abut against the inner wall 411a of the hollow cavity; and a connecting wall 422c, configured to connect the first side wall 422a with the second side wall 422b.

The first side wall 422a and the second side wall 422b are two side walls which are arranged oppositely along the width direction X of the box 30 on the second fixing portion 422, and a certain gap is formed between the first side wall 422a and the second side wall 422b. In general, the shapes and sizes of the first side wall 422a and the second side wall 422b are consistent. Taking the first side wall 422a as an example, the shape of the first side wall 422a may be a regular rectangle, square or trapezoid, or a simple shape such as an "L" shape. Specifically, the shape and size of the first side wall 422a may be determined according to the frame 40.

The connecting wall 422c is arranged between the first side wall 422a and the second side wall 422b to connect the first side wall 422a with the second side wall 422b. One or a plurality of connecting walls 422c may be provided. As shown in Fig. 8, the connecting wall 422c may be connected to end surfaces at one end of the first side wall 422a and one end of the second side wall 422b to form a "U-shaped" or inverted "U-shaped" structure. Through this design, the connecting element 42 can squeeze the side surface of the first side wall 422a and the side surface of the second side wall 422b to facilitate the mounting of the reinforcing beam 41. As shown in Fig. 9, in another embodiment of the present application, the connecting wall 422c may be connected to end surfaces at both ends of the first side wall 422a and both ends of the second side wall 422b to form a structure in a shape like the Chinese character " 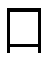 ". This structure has higher resistance to deformation. According to this idea, the connecting wall 422c may be arranged in the middle of the first side wall 422a and the second side wall 422b to form an "H-shaped" structure, or a plurality of connecting walls 422c may be arranged at different positions between the first side wall 422a and the second side wall 422b to form a structure in a shape like the Chinese character " 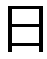 " or " 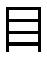 ". Details are not specifically limited here.

By enabling the first side wall 422a and second side wall 422b on the second fixing portion 422 to abut against the inner wall 411a of the hollow cavity of the reinforcing beam 41, the connection reliability between the reinforcing beam 41 and the connecting element 42 can be further improved.

According to some embodiments of the present application, referring to Fig. 10, Fig. 10 is a partial schematic exploded view of a box provided in an embodiment of the present application. As shown in the figure, the connecting wall 422c is connected to one end of the first side wall 422a and one end of the second side wall 422b, and the other end of the first side wall 422a is separated from the other end of the second side wall 422b, so as to form an opening 422d opposite to the connecting wall 422c.

When only one connecting wall 422c is provided, the connecting wall 422c can be arranged on the end surface of the first side wall 422a and the end surface of the second side wall 422b in the height direction Z, and the connecting wall 422c may be connected to the first side wall 422a and the second side wall 422b in a manner of integrated molding or welding.

At the other end opposite to the connecting wall 422c, an opening 422d is formed between the first side wall 422a and the second side wall 422b which are arranged oppositely.

Through the opening 422d formed by the first side wall 422a and the second side wall 422b, when the reinforcing beam 41 is connected to the second fixing portion 422 of the connecting element 42, the first side wall 422a and the second side wall 422b can be squeezed to facilitate the second fixing portion 422 to enter the hollow cavity 411 of the reinforcing beam 41, thereby improving the mounting efficiency of the reinforcing beam 41.

According to some embodiments of the present application, referring to Fig. 7, the reinforcing beam 41 is provided with a through hole 412, and at least part of the second fixing portion 422 is exposed from the through hole 412 so as to be welded and fixed with the reinforcing beam 41.

The reinforcing beam 41 may be provided with a plurality of through holes 412, and the plurality of through holes 412 are arranged at intervals along the surface of the reinforcing beam 41 close to the side of the battery module 20. When the second fixing portion 422 of the connecting element 42 partially or completely enters the hollow cavity 411 of the reinforcing beam 41, the position of the second fixing portion 422 can be observed from the through hole 412. When the second fixing portion 422 reaches an appropriate position, part of the second fixing portion 422 is exposed through the through hole 412, so that the connecting element 42 and the reinforcing beam 41 can be fixed by welding.

By arranging the through hole 412 on the reinforcing beam 41, the reinforcing beam 41 can be welded to the second fixing portion 422 exposed from the through hole 412 to improve the connection strength between the reinforcing beam 41 and the connecting element 42, thereby improving the connection reliability between the reinforcing beam 41 and the frame 40.

According to some embodiments of the present application, still referring to Fig. 10, the first fixing portion 421 is connected to an edge of the second fixing portion 422 and extends towards a direction away from the reinforcing beam 41. Optionally, the frame 40 is provided with an accommodating groove 402, and the accommodating groove 402 is configured to accommodate at least part of the first fixing portion 421.

The first fixing portion 421 is connected to the second fixing portion 422, but the first fixing portion 421 is closer to the side of the frame 40 compared to the second fixing portion 422. The frame 40 is provided with an accommodating groove 402. The accommodating groove 402 may be of a regular shape such as a rectangle or a square, or a shape adapted to the first fixing portion 421, which enhances the reliability of local assembly while reducing the stress concentration, thereby improving the connection strength. The contour of the accommodating groove 402 is greater than or equal to the contour of a projection of the first fixing portion 421 on the frame 40, so as to provide a space for accommodating the first fixing portion 421. One or a plurality of accommodating grooves 402 may be provided. The specific depth needs to be determined in conjunction with the specific design of the frame 40, and is not limited here. The first fixing portion 421 extends towards the frame 40 from the edge of the second fixing portion 422 close to the side of the frame 40, and the first fixing portion 421 is partially or completely accommodated in the accommodating groove 402 on the frame 40, thereby improving the space utilization of the box 30.

Through the accommodating groove 402 on the frame 40, the first fixing portion 422 can be accommodated in the space formed in the accommodating groove 402 to reduce the space occupation of the connecting element 42 in the box 30, thereby reducing the risk of the battery module 20 colliding with the connecting element 42 during use of the box 30, and further improving the connection reliability of the reinforcing beam 41.

According to some embodiments of the present application, the present application further provides a battery 10, including the box 30 in the above embodiment and a battery cell 21. The box 30 is configured to accommodate the battery cell 21.

According to some embodiments of the present application, the present application further provides an electrical apparatus, including the above battery 10. The battery 10 is configured to provide electric energy to the electrical apparatus. The electrical apparatus may be any of the above apparatuses or systems using the battery 10.

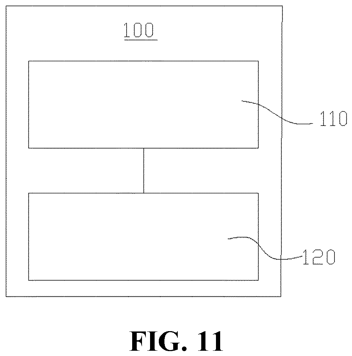

According to some embodiments of the present application, referring to Fig. 11, the present application further provides a manufacturing device for batteries, including a providing module 100, configured to provide a battery cell 21 and a box 30, the box 30 including: a frame 40, a reinforcing beam 41 and a connecting element 42, where the frame 40 is configured to form an accommodating cavity 401, the reinforcing beam 41 is arranged inside the accommodating cavity 401, the reinforcing beam 41 has a hollow cavity 411, the connecting element 42 is configured to connect the frame 40 with the reinforcing beam 41, and part of the connecting element 41 is accommodated in the hollow cavity 411; and an assembly module, configured to accommodate the battery cell 21 in the box 30.

According to some embodiments of the present application, referring to Fig. 5 to Fig. 8 and Fig. 10, the present application provides a box 30. The box 30 includes a frame 40, a reinforcing beam 41 and a connecting element 42. The connecting element 42 is arranged between the frame 40 and the reinforcing beam 41 to connect the frame 40 with the reinforcing beam 41. The frame 40 is provided with an accommodating groove 402, and the reinforcing beam 41 is provided with a hollow cavity 411 and a through hole 412. Part of the connecting element 42 is accommodated in the hollow cavity 411. The connecting element includes a first fixing portion 421 and a second fixing portion 422 which are connected. At least part of the first fixing portion 421 is accommodated in the accommodating groove 402 on the frame 40 so as to be connected to the frame 40. At least part of the second fixing portion 422 is exposed from the through hole 412 on the reinforcing beam 41 so as to be welded and fixed with the reinforcing beam 41. The second fixing portion 422 includes a first side wall 422a and a second side wall 422b which are arranged oppositely and a connecting wall 422c. The connecting wall 422c is connected to one end of the first side wall 422a and one end of the second side wall 422b. The other end of the first side wall 422a is separated from the other end of the second side wall 422b, so as to form an opening 422d opposite to the connecting wall 422c. The connecting wall 422, the first side wall 422a and the second side wall 422b at least partially abut against the inner wall 411a of the hollow cavity of the reinforcing beam 41.

Finally, it should be noted that: the above embodiments are merely used to illustrate the technical solutions of the present application, instead of imposing any limitation on the present application. Although the present application has been described in detail with reference to the above embodiments, those of ordinary skill in the art should understand that: the technical solutions disclosed in the above embodiments may still be modified, or a part or all of the technical features thereof may be replaced equivalently. These modifications or replacements are not intended to make the essence of corresponding technical solutions depart from the scope of the technical solutions of the embodiments of the present application, and should be encompassed within the scope of the claims and specification of the present application. In particular, the technical features mentioned in the embodiments can be combined in any manner as long as there is no structural conflict. The present application is not limited to the specific embodiments disclosed herein, but rather includes all technical solutions falling within the scope of the claims.

## Claims

1. A box of a battery, comprising:
a frame, configured to form an accommodating cavity;
a reinforcing beam, arranged inside the accommodating cavity, the reinforcing beam having a hollow cavity; and
a connecting element, configured to connect the frame with the reinforcing beam, part of the connecting element being accommodated in the hollow cavity.

2. The box according to claim 1, wherein the connecting element comprises a first fixing portion and a second fixing portion which are connected, the first fixing portion is configured to connect the frame, the second fixing portion is configured to connect the reinforcing beam, and at least part of the second fixing portion is accommodated in the hollow cavity.

3. The box according to claim 2, wherein at least part of the second fixing portion abuts against an inner wall of the hollow cavity.

4. The box according to claim 3, wherein the second fixing portion comprises a first side wall and a second side wall which are arranged oppositely and are configured to abut against the inner wall of the hollow cavity; and
a connecting wall, configured to connect the first side wall with the second side wall.

5. The box according to claim 4, wherein the connecting wall is connected to one end of the first side wall and one end of the second side wall, and the other end of the first side wall is separated from the other end of the second side wall, so as to form an opening opposite to the connecting wall.

6. The box according to claim 2, wherein the reinforcing beam is provided with a through hole, and at least part of the second fixing portion is exposed from the through hole so as to be welded and fixed with the reinforcing beam.

7. The box according to any one of claims 2 to 6, wherein the first fixing portion is connected to an edge of the second fixing portion and extends towards a direction away from the reinforcing beam.

8. The box according to any one of claims 2 to 6, wherein the frame is provided with an accommodating groove, and the accommodating groove is configured to accommodate at least part of the first fixing portion.

9. A battery, comprising:
a battery cell; and
the box according to any one of claims 1 to 8, the box being configured to accommodate the battery cell.

10. An electrical apparatus, comprising the battery according to claim 9, wherein the battery is configured to provide electric energy.

11. A manufacturing device for batteries, comprising:
a providing module, configured to provide a battery cell and a box, the box comprising:
a frame, configured to form an accommodating cavity,
a reinforcing beam, arranged inside the accommodating cavity, the reinforcing beam having a hollow cavity, and
a connecting element, configured to connect the frame with the reinforcing beam, part of the connecting element being accommodated in the hollow cavity; and
an assembly module, configured to accommodate the battery cell in the box.
